Europäisches Patentamt

(19) European Patent Office

Office européen des brevets

(11) Numéro de publication: **0 165 891**
**A1**

(12) # DEMANDE DE BREVET EUROPEEN

(21) Numéro de dépôt: 85460008.7

(22) Date de dépôt: 10.04.85

(51) Int. Cl.⁴: **A 47 J 39/02**
**A 47 B 31/02, B 65 G 1/07**

(30) Priorité: 13.04.84 FR 8406022

(43) Date de publication de la demande:
27.12.85 Bulletin 85/52

(84) Etats contractants désignés:
BE CH DE GB IT LI NL

(71) Demandeur: **Le Bon, Daniel**
**16, rue Geoffroy de Mellon**
**F-35740 Pace(FR)**

(72) Inventeur: **Le Bon, Daniel**
**16, rue Geoffroy de Mellon**
**F-35740 Pace(FR)**

(54) **Dispositif support mobile avec différents combinés pour la préparation, le conditionnement, le stockage et la distribution d'aliments.**

(57) Dispositif support mobile avec combinés pour la préparation et la distribution d'aliments.

L'invention concerne les appareils de préparation en cuisine et de distribution d'aliments. Elle comprend un socle (2) surmonté d'au moins une colonne présentant une fente verticale (4), une vis sans fin (6) entrainée par des moyens de commandes (7) un écrou (8) en prise avec la vis sans fin (6) et immobilisé en rotation par un ergot (10) traversant la fente de colonne (4) cet ergot assurant le déplacement des accessories; un tube (15) au moine s'emboite sur la colonne (4); des coulisseaux (9) dont un au moins est mini d'une vis de blocage (16) coulissent autour et le long de la colonne (4) et éventuellement du tube (15) superposable sur la colonne (4); ce dit tube permet le dégagement ou le blocage de la partie supérieure des différents assessoires chacun ayant un même système de fixation et de dégagement rapide.

-La partie inférieure est composée d'un système identique mais reste libre à toutes translations sur la colonne (4). Les accessoires du support (1) sont une série de plateaux de distribution superposés, des meubles de stockage, de conditionnement et de distribution, un plateau à roulement, un support de mise en cuisson, un accessorie portionneur rond, un accessoire portionneur rectangulair, un ouvre-boites, un accessorie doseur, un accessoire de préparation de sandwiches, un accessorie de moulage, d'évidage, de coupe en quartiers, un flexible de transmission pour outillages avec fouet, mélangeur, goupillon, mixer, panier d'essorage et d'écalage.

Le dispositif selon l'invention est particulièrement destiné à la restauration collective.

./...

FIG 1

DISPOSITIF SUPPORT MOBILE AVEC COMBINES POUR LA
PREPARATION ET LA DISTRIBUTION D'ALIMENTS

La présente invention concerne les appareils de présentation d'aliments en restauration principalement collective, en self-service ou en service en salle.

De nombreuses tâches longues, routinières, dures, dangereuses sont essentiellement exécutées manuellement ou avec des moyens souvent irrationnels pour une productivité compétente. Parmi ces multiples inconvénients pour la présentation des aliments en self ou autres, il est nécessaire de ravitailler en permanence les présentoirs d'aliments, ceci par un, ou plusieurs, intervenants en transférant sans cesse d'un côté à l'autre les entrées, les viandes, les légumes, les salades, les fromages, les desserts, le pain, les vaisselles. Si pour certaines vaisselles on peut trouver des tables ou container de mises à niveaux, pour les aliments, il n'est pas possible de les entasser ainsi avec le même principe sans risque d'écrasement.

Les accessoires plateaux intercalés (20) du support (1) de l'invention permettent de supprimer les gestes robots des intervenants en diminuant de 80 % les gestes qui étaient nécessaires, ceci par une distribution automatique de tous les niveaux dans des meubles appropriés chauds, froids ou neutres (24), qui maintiennent les aliments conditionnés. En cuisine, il y a de nombreuses élaborations qui présentent de gros inconvénients. Certaines tâches sont très longues, répétitives, dures, dangereuses, irrationnelles par la multitude des récipients à manipuler. Pour mettre à cuire, sortir, monter, descendre ou transporter des plaques et différents récipients lourds, pleins et brûlants deux personnes s'activent avec le mal et le risque que cela comporte. L'accessoire plateau à roulement (30) du support (1) assure le transport et la remise à niveau par une seule personne sans effort et sans risque.

La cuisson en sauteuse qui est une poële à 40 ou 50 rations, sur grill ou en friteuse est une opération très longue selon l'effectif. Les intervenants ont constamment les mains et le visage exposés aux vapeurs, aux projections de graisses, une glissade et ce sont les bras qui y plongent. Le même temps et les mêmes risques se retrouvent pour tourner les aliments sur l'autre face et ensuite pour les extraire de cuisson.

Avec l'accessoire support de mise en cuisson (40) du support colonne (1), la cuisson des nombreux aliments ainsi traités se fait en supprimant tous ces inconvénients ; l'appareil permet de déposer, de tourner et d'ôter les aliments automatiquement, de les déverser dans un récipient de service. Il suffit juste d'actionner les commandes de la colonne et de ravitailler l'accessoire sans mal et hors de tout risque. Le dressage sur récipients individuels des entrées, salades, fromages, desserts, ... ne se fait jamais sans une manipulation considérable de plateaux où il faut prendre d'un côté pour remplir, reprendre pour stocker . De plus, s'il y a plusieurs éléments, comme c'est souvent le cas, à dresser sur la même assiette, il faut jongler avec les plateaux et les différents récipients d'aliments, ce qui rend le travail inévitablement irrationnel. Avec les plateaux intercalés et pivotants (20) sur la colonne (4) ce travail peut être assuré très méthodiquement avec un moindre mal et vingt pour cent de gains de temps minimum.

La découpe des aliments ronds : fromages, tartes, gâteaux divers, quiches, pizzas, ... en ration individuelle se fait à l'aide d'un couteau et l'on ne peut découper que deux parts à la fois. Avec l'accessoire portionneur rond (50) du support (1), en 2 secondes, on peut couper 6, 8 ou 12 parts de gâteaux, 24 part de fromage sans brisure et avec une régularité parfaite. Soit une commodité et un procédé 10 fois plus rapide avec 80 % de gain de temps.

La découpe des aliments rectangulaires cuits sur grandes plaques : tartes, gâteaux, quiches, pizzas, ... se fait aussi au couteau. Pour découper des tomates en tranches , il n'y a que le coupe-tomate individuel ou bien souvent le couteau, afin de leurs préserver leur forme initiale ; ce qui représente un temps considérable lorsqu'il y en a plusieurs centaines à faire. La même chose pour faire des portions de patés divers qui ne se coupent pas au trancheur, les citrons ...

Avec l'accessoire portionneur rectangulaire (56) du support (1), en 2 secondes, il peut couper 60 tomates en tranches en gardant les formes intactes, 100 parts de patés divers, 40 à 50 parts de gâteaux, etc...

L'ouverture des boîtes de conserve, lorsqu'il y en a une centaine est une tâche très longue. La roue crantée à souvent des ratées, il faut repiquer un autre endroit de la boîte ; ce qui rend la tâche agaçante, trop longue et aussi très fatiguante si l'ouvre-boîte est manuel ; l'ouvre-boîte électrique traditionnel est d'un tel prix qu'il décourage souvent tout acquéreur. Avec l'accessoire cloche ouvre boîte (61) du support (1), l'ouverture des boîtes se fait par emporte pièce. La commodité et le gain de temps sont appréciables.

Le remplissage des desserts, crèmes, compotes, ... en rations individuelles se fait ramequin par ramequin à la louche ou au pot ; cela nécessite aussi une manipulation excessive : poser, reprendre, ranger et ceci plusieurs fois pour chaque plateau. Lorsqu'il y a 300, 1 000 ou 3 000 parts à faire, il faut y consacrer un temps considérable.

Avec l'accessoire de dosage d'aliments liquides et à pâtes molles (67) du support (1), il est possible, en 2 secondes, de remplir 20 ou 30 ramequins ou 35 barquettes. Pour se faire, il n'y a qu'à s'occuper des commandes électriques de l'appareil et de faire pivoter le plateau rempli pour laisser la place au suivant permettant soit le remplissage de 300 ou 400 récipients individuels sans aucune manipulation en 5 mn maximum. Ce qui représente un gain de temps considérable : de l'ordre de 80 %. Identiquement, le garnissage des tartelettes individuelles, choux, éclairs, compotes, fromages blancs ... peuvent être garnis avec 50 à 60 % de gain de temps.

La préparation de sandwiches est une tâche très longue, il faut couper chaque baguette en 3 ou 4, reprendre chaque part pour les ouvrir, ensuite la tenir dans une main en l'écartant avec deux doigts pour la garnir, la refermer et ainsi de suite. Lorsqu'il y en des centaines à faire, c'est excessivement long. Avec l'accessoire (80) du support (1), en 4 secondes on peut couper, ouvrir et écarter 20 sandwiches pouvant être ensuite garnis successivement et beaucoup plus rationnellement et rapidement. Une fraction de seconde pour tous les refermer : d'où une commodité et un gain de temps de 80 %

Le moulage de la pâte des tartelettes individuelles se fait en plusieurs temps. Il faut étaler la pâte sur un marbre, tailler les part une à une, même avec un laminoir découpeur, il faut prendre chaque petit moule, centrer la pâte et tourner autour du moule avec deux doigts pour qu'elle épouse sa forme en doublant le temps et l'attention pour obtenir un rebord correct. Pour évider une grande quantité de légumes ou fruits, il faut manuellement un temps important pour calibrer des pommes de terre pour certaines utilisations. Pour couper en quartier des tomates, citrons, c'est la même chose.

Avec les accessoires de moulage, d'évidage, de calibrage, de coupe en quartiers (92) du support (1) il est possible de couper et de mouler 30 tartelettes en 4 secondes. Avec des accessoires différents mais basés sur le même principe, il est possible de calibrer 50 pommes de terre, d'évider 50 pommes ou pommes de terre, de couper 50 tomates ou citrons en quartiers ; tout cela en 4 secondes environ : d'où un gain de temps très important (de l'ordre de 95 %). Avec l'accessoire doseur (67), il est possible en plus de garnir directement les tartelettes, les cavités des pommes de terre ou des pommes, ou encore d'étaler automatique le beurre sur les sandwiches d'où la multiplication de la commodité et du gain de temps.

Pour mélanger certains aliments dans des grandes marmites, il n'y a que le fouet à main (le mixer ou la "girafe" des collectivités pour préparer la purée instantannée (largement utilisée aujourd'hui)) ce qui fait des cordes. En plus, sa manipulation n'est pas facile avec le support à hauteur fixe et les deux bras de support de lames. Il est encombrant et ne sert en définitif que très peu. Son acquisition n'est plus amortissable. Pour nettoyer le corps des robinets de marmites lorsqu'elles ont cuit du lait ou autres, il faut intervenir avec un objet métallique et gratter, puis y pousser et retirer plusieurs fois une éponge métallique. Pour essorer la salade , des légumes, il existe certes du matériel, mais il a comme inconvénient de trop plaquer les aliments, par la force centrifuge, contre la paroi et le fond. Il faut arrêter et redisperser au centre pour terminer l'essorage. De plus, cet appareil ne fait que cela. Pour écaler les oeufs, ce n'est possible qu'avec les mains. Un appareil spécialisé pour les petites et moyennes entreprises est trop encombrant et l'amortissement est impossible. Avec le flexible de transmission (97) pour outillages, le fouet (102) mélange parfaitement, et sans effort, les grosses quantités de purées, etc... Le mélangeur (103) fait la même chose, mais pour des légumes fragiles après cuisson et a comme effet de faire remonter les aliments vers le haut de la marmite permettant un mélange et un assaisonnement homogènes.

Le goupillon de nettoyage (104) monté sur le flexible (97) est rotatif. Il nettoie les marmites et surtout le corps des robinets de marmites impécablement, d'où une hygiène parfaite sans mal et avec un gain de temps. Les outillages (102), (103) et (104) peuvent être adaptés à un manche traditionnel pour de plus petites tâches afin d'éviter une multiplication d'outillages de ce genre.

Le mixer (106) a la même fonction que tous les mixers ou girafes des grandes collectivités mais avec l'avantage de n'être qu'un petit accessoire peu coûteux et prend 100 fois moins de place. Sa vitesse de rotation est variable à souhait, son utilisation sur le flexible (97) est d'une manipulation nettement plus aisée à hauteurs différentes dans tous les sens et dans tous les récipients.

Pour l'essorage de la salade, le panier (107) est utilisable pour deux fonctions et évite d'investir dans une essoreuse traditionnelle à une seule fonction : elle se pose dans un bac de lavage de légumes, elle a plusieurs niveaux de disques ondulés, une paroi ondulée d'où un moindre placage et la possibilité d'y mettre 3 fois plus de légumes sur la même surface. Pour les oeufs, le panier (107) est d'abord utilisé pour les mettre en cuisson et ensuite dans la même marmite, ils sont écalés par l'effet conjugué de la rotation de plusieurs disques ondulés et des parois ondulées dissociées ainsi qu'avec la pression de l'eau.

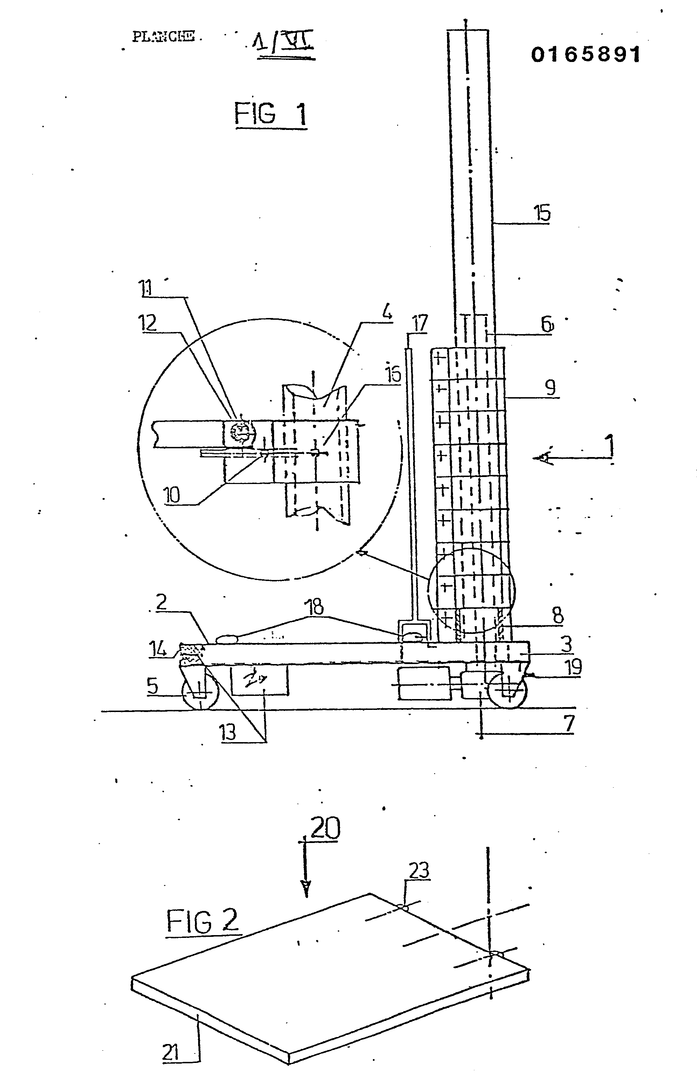

Tel qu'il est représenté, le dispositif 1 de la figure 1 comprend un socle (2) qui supporte au moins une colonne verticale présentant une fente verticale (4); une vis sans fin (6) logée à l'intérieur de la dite colonne verticale disposée verticalement; des moyens de commandes (7) aptes à entrainer en rotation la dite vis sans fin (6); un écrou (8) en prise avec la vis sans fin (6) et immobilisé en rotation par un ergot (10) traversant la fente, cet ergot assurant le déplacement des accessoires; un tube (15) au moins s'emboite sur la colonne (4); des coulisseaux (9) dont un au moins est muni d'une vis de blocage (16), ils coulisse autour et le long de la colonne (4) et éventuellement du tube (15) superposable sur la colonne (4). L'ergot (10) peut s'escamoter, l'écrou (8) devient alors fou sur la vis sans fin (6) en tranformant celle-ci en arbre de transmission et permet ainsi d'entrainer en rotation un flexible (97); cela permet aussi un éventuel déplacement et l'utilisation vertiacle de tous les accessoires par accompagnement manuel.

Des leviers excentriques (18) pour soulever et transporter les meubles (24) spécialement conçus pour recevoir extérieurement et sous leur fonds entre des guides (28) le socle (2) et intérieurement la colonne (4) et les plateaux (20) avec leurs contenus ;

Les accessoires plateaux (20) de la figure (2) qui peuvent être rectangulaires et composés d'un cadre (21) avec recouvrement plein ou d'une grille sont fixés ou simplement supportés par les coulisseaux (9). Les plateaux vides se dégagent automatiquement en se relevant ou en se glissant horizontalement par les actions conjuguées du contact (17) libéré déterminant ainsi le démarrage du moteur (7) qui va entrainer en rotation la vis sans fin (6) celle-ci oblige l'écrou (8) muni de son ergot (10) à se déplacer verticalement et à pousser les coulisseaux (9) munis de leurs différents niveaux de plateaux (20). Lorsque le deuxième plateau (20) arrive au niveau du contact (17) le moteur (7) va immobiliser l'ensemble et ceci recommencera autant de fois qu'il y a de niveau de plateaux. Tous les plateaux pleins sont superposés dans une même position et tous les plateaux vides se superposeront dans une autre position. Lors d'une utilisation pour des récipients collectifs ou containers lourds et plus encombrants en hauteurs que les récipients individuels il suffit d'utiliser une fixation ou un emboitement sur deux ou trois prévus sur les coulisseaux (9) d'où des intervalles modulables.

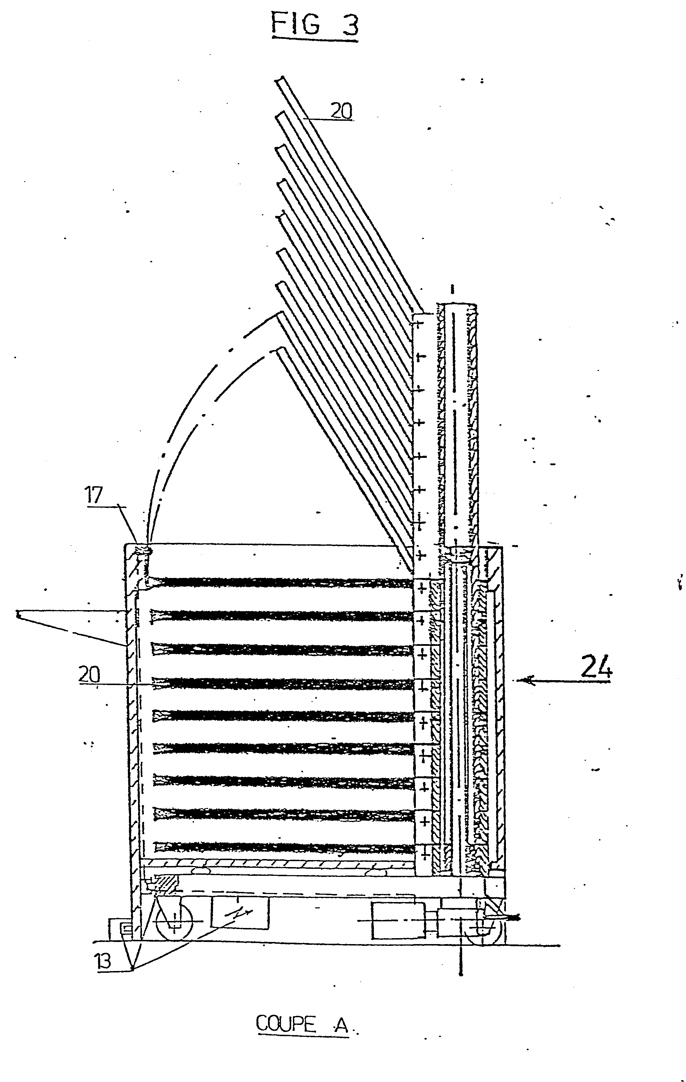

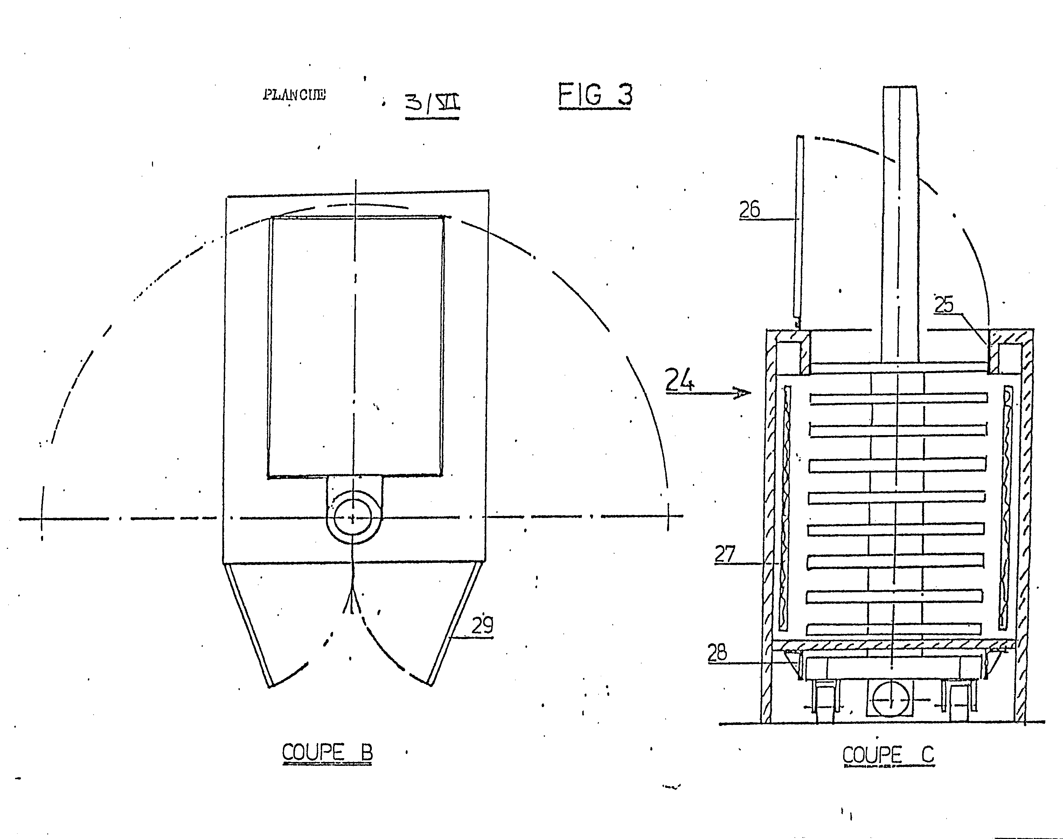

Les accessoires de la Figure 3 sont des meubles (24) de stockage et de distribution, chauds, froids ou neutres conçus spécialement pour recevoir, à l'intérieur, la colonne (4) munie de plateaux (20). Le socle (2) support de colonne passant sous le fond et entre les pieds du meuble, une réservation avec joint calorifique (25) laisse l'emplacement de la colonne. Deux guides (24) permettent un centrage utile ensuite pour le dégagement vertical des plateaux (20) par l'ouverture supérieure du meuble. Des joints calorifiques (25) ; des portes (29) a couvercle relevable (26) maintiennent les températures décidées, fournies par les éléments soit froids, soit chauds (27). Un ensemble, boitier et prise de courant (13), assure l'alimentation électrique des meubles ainsi que de la colonne de sustentation. Le meuble neutre est strictement basé sur le même principe, il est simplement dépourvu d'élément interne (27) de maintien de température et peut ne pas avoir de couvercle (26) ni de porte d'accès (29). Des excentriques (18) fixés sur le socle (2) permettent de soulever le meuble, facilitant le trans-

0165891

port de l'ensemble.

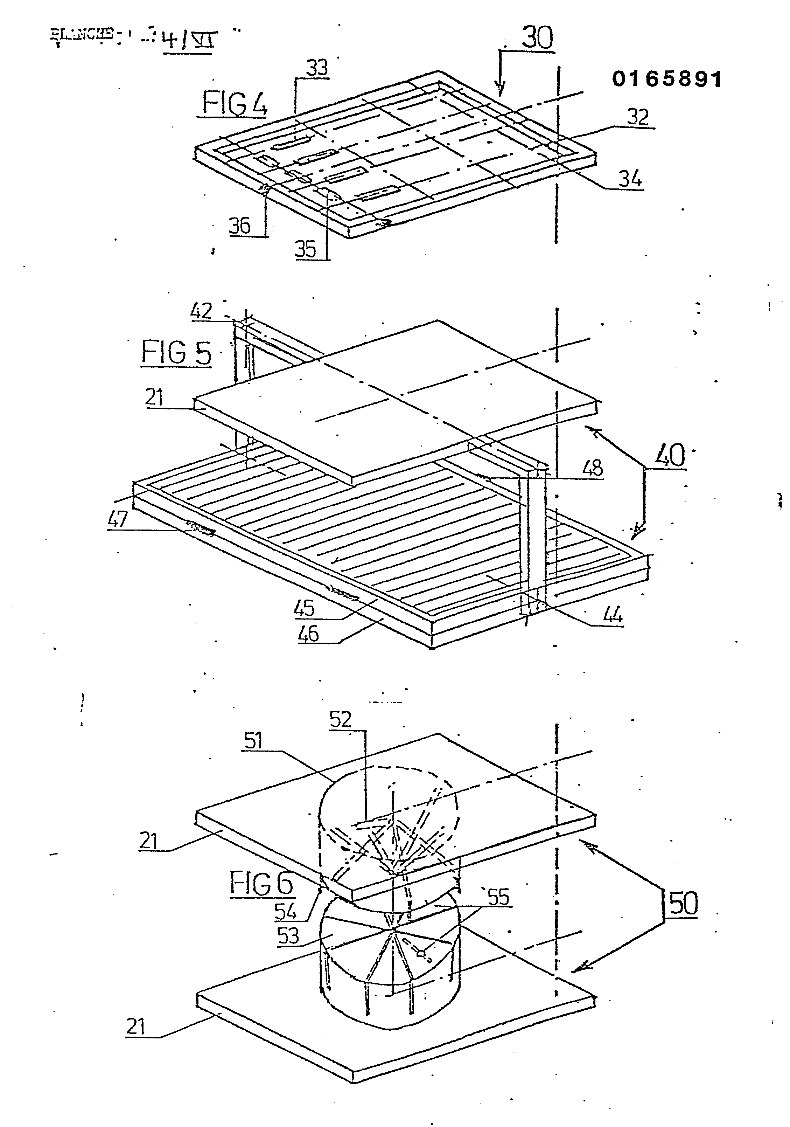

L'accessoire plateaux à roulements de la Figure 4 est fixé sur les coulisseaux (9) guidé sur le support (1) pour assurer la manipulation, le transport, la mise à niveau de récipients ou contenants divers encombrants, pleins, brûlants, lourds, dangereux à porter. Un coulisseau (9) prolongé d'un encadrement avec dans le sens de la longueur des tiges (32) munies de roulements (33), dans le sens de la largeur des tiges (34) munies de roulements (35). Lorsque les deux sens se situent sur le même niveau, les roulements (33) (35) se contrarient, le chargement est donc stable. A l'aide d'un excentrique (36) à leviers, les roulements (33) peuvent se mettre à niveau supérieur ou inférieur par rapport aux roulements (35), ce qui facilite le chargement ou le déchargement des contenants suivant une des deux translations horizontales par roulement sur le plateau.

L'accessoire support de mise en cuisson (40) de la Figure 5 est composé d'un coulisseau (9) prolongé d'un cadre (21) spécialement conçu. Avec de multiples fixations pour assurer le support de plusieurs autres accessoires. Sur le travers du cadre (21),                    un support (42) assurer la rotation de deux axes (44) et l'accrochage de grilles superposées (45) (46) permettant la mise en cuisson de pièces de viandes, de poissons de différentes épaisseurs ; l'écart étant maintenu par des charnières extensibles (47). Des fermoirs rapides et réglables (48) assurent la solidarité entre les deux grilles. Le déplacement vertical du cadre support (21) permet de déposer soit les grilles (45) (46) ou un panier basé sur le même principe ; dans le récipient de cuisson, de relever l'ensemble pour permettre de changer de face de cuisson après une rotation de 180° des éléments (45) (46), ceci par l'action de la commande (19) du support (1).                    Pour débarasser, il suffit de prévoir un seul plateau (20) fixé sur un coulisseau (9) de le positionner à l'opposé du support en cuisson. Il sert alors de plan de débarassage pour y déposer divers récipients destinés à recevoir les aliments cuits. Pour vider le contenu des grilles ((45) (46) ou du panier, il suffit de pivoter l'ensemble de 180° autour de la colonne, d'ouvrir les fermoirs (48) pour les grilles, de basculer pour faire glisser les aliments dans les récipients en attente. Pour gagner du temps, un deuxième jeu de grilles ou un autre panier peuvent être préalablement remplis pour être remis immédiatement en cuisson. Le bandeau de façade qui habille les pieds des appareils de cuisson est relevable afin de laisser le socle (2) de la colonne s'encastrer entre les pieds, de guider et d'assurer le centrage et la stabilité pour la cuisson mais aussi pour le branchement électrique direct prévu à cet effet.

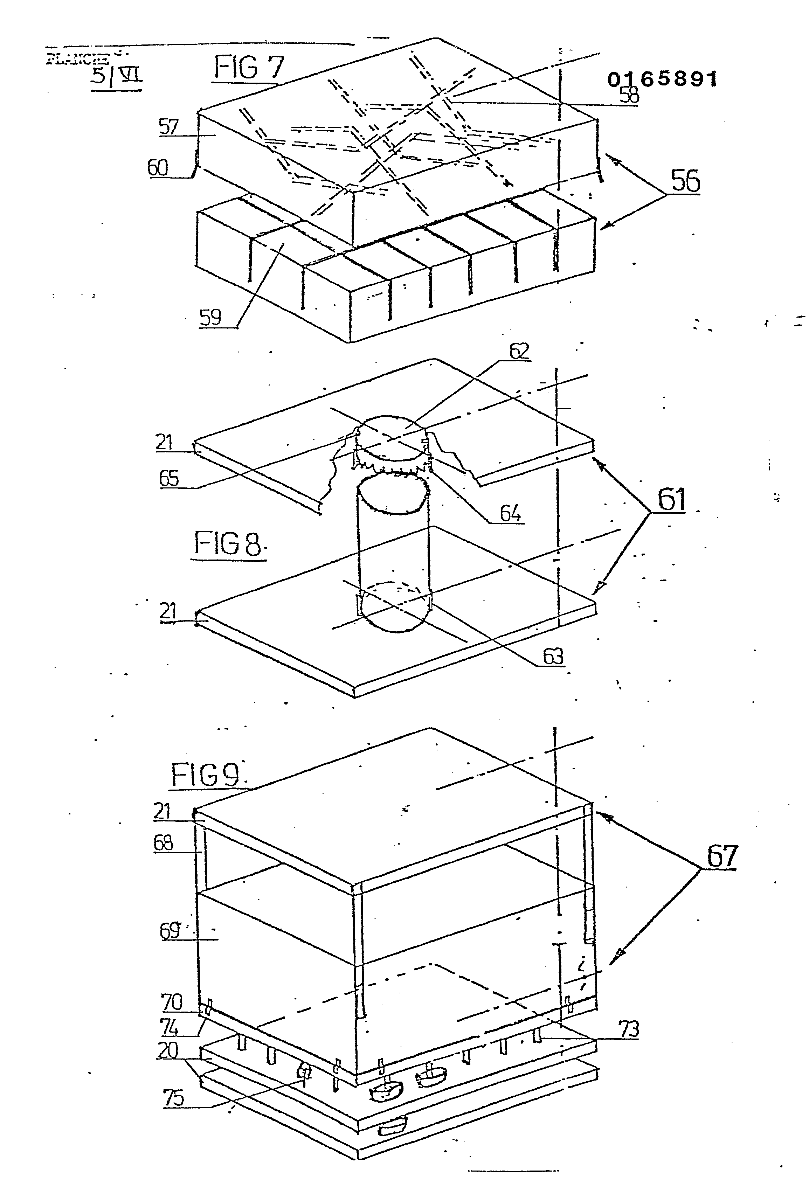

Les accessoires portionneurs ronds (50), rectangulaires (56) des Figures 6 et 7 sont basés sur le même principe, ils sont seulement de forme différentes pour découper plusieurs parts d'aliments simultanément, en parts triangulaires ou rectangulaires allant jusqu'à la fine tranche selon l'écartement des matrices ainsi que des lames.

L'ensemble est constitué de deux parties, chacune étant fixée sur un cadre (21) et son coulisseau (9) assurant le déplacement vertical sur la colonne (1) et le tube (15). La première partie support (51) (57) de lames (52) (58) est bloquée sur le tube (15) à hauteur désirée par la vis de serrage (16) du coulisseau (9). La deuxième partie matrice (53) ou (59) où sont déposés les aliments à découper est montée sur le coulisseau (9) libre. En fonctionnement, la partie supérieure coupe les aliments en portions et les lames (52) (58) s'escamottent dans la matrice (53) (59) en fin de course, puis les aliments sont retirés avec une spatule fine. Un carton peut être préalablement disposé sous les aliments et une fois coupé avec ceux-ci, il devient un support individuel de part. Des guides (54) ou (60) assurent le parfait engagement des lames (53) (58) dans la matrice (53) (59) avec en plus pour la matrice (53) des butées (55) permettant un travail de série.

L'accessoire ouvre-boîte (61) de la Figure 8 se compose de deux parties. Pour la partie supérieure, un ensemble coulisseau (9) et cadre (21) dans lequel est fixée une cloche dentelée (62), cette partie est bloquée sur le tube (15) à hauteur désirée par la vis de serrage (16). La partie inférieure se compose d'un coulisseau (9) et d'un cadre (21) sur lequel sont posées, entre des guides (63) les boîtes à ouvrir. Des guides (64) situés sur la cloche (62) assurent un centrage parfait. Les dents de la cloche (62) sont de longueurs différentes de manière à éliminer progressivement la résitance. En fonctionnement la boîte se déplace verticalement et vient en contact contre la cloche, le couvercle reste emprisonné à l'intérieur de la cloche par des clips (65). En variante, un ressort peut éventuellement être comprimé, son déclenchement brusque permettrait une percussion.

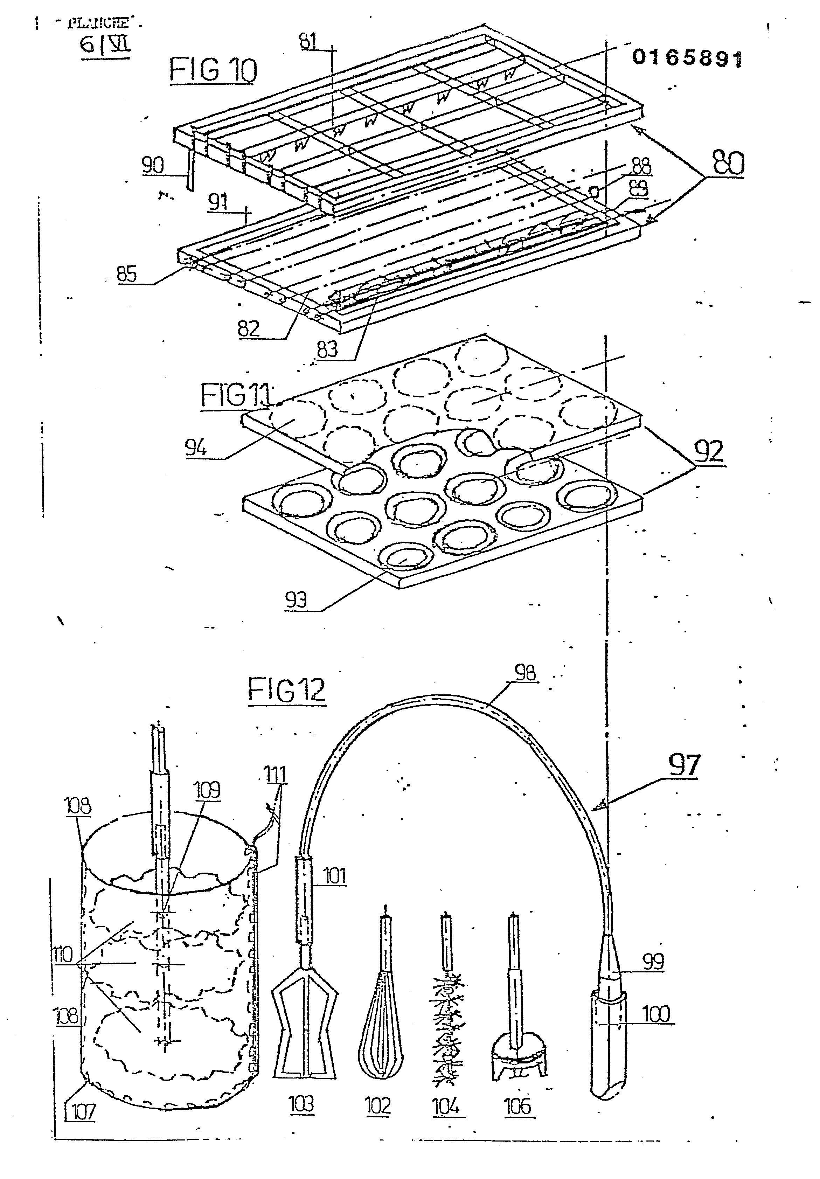

L'accessoire doseur (67) de la Figure 9 est composé de deux parties, une supérieure avec un ensemble coulisseau (9) bloqué en haut du tube (15) par la vis de serrage (16), un cadre (21), une cuve (69) suspendue par des bras (68) avec dans son fond (interchangeable) épais (70) comprenant des fraissures recevant par dessous des embouts coniques (73) accrochés et maintenus en pression par l'intermédiaire d'une grille et des crochets tendeurs (74) contre le fond de la cuve. Ils sont aussi coniques en partie inférieur pour le déversement des liquides ou des pâtes molles. Chaque embout possède une soupape (75) qui assure une fonction d'ouverture et de fermeture de l'orifice. La deuxième partie inférieure est composée d'un coulisseau (9) et d'une série de plateaux (20) chargés de récipients vides individuels. En fonctionnement, il faut disposer la cuve (69) à l'opposé des plateaux en attente, soit à 180°, il suffit de pivoter le premier plateau (20) autour du support (1) juste au-dessous de la cuve, face aux queues des soupapes (75), la vis sans fin (6) déplace verticalement l'écrou (8) et l'ensemble coulisseaux (9) et plateaux (20) jusqu'à l'établissement du contact des queues de soupapes (75) avec les récipients vides tout en maintenant une légère pression permettant le remplissage de ces récipients. A la fin du cycle remplissage, il faut redescendre légèrement pour permettre aux soupapes de regagner leurs sièges par leur propre poids et par la pression conjuguée des aliments. Le plateau plein est à repivoter de 180° pour qu'il puisse se dégager verticalement pour laisser l'accès libre sous la cuve à un autre plateau avec des récipients vides. En cas d'utilisation pour des pâtes molles, compotes, ... un couvercle très lourd avec des rebords en joints racleurs    vient glisser à l'intérieur de la cuve. Son poids facilite le déversement de ces aliments. Des embouts (78) spéciaux sans soupape et plus longs permettent le remplissage des choux, éclairs, tartelettes, etc...

L'accessoire de préparation de sandwiches (80) de la Figure 10 est composé de deux parties. Une supérieure avec un ensemble coulisseau (9) et cadre (91) dans lequel sont fixées et tendues dans les deux sens des lames dentelées (81). En variante, une translation limitée des lames longitudinales, le distributeur (67) garni de beurre ramolli fixé sur la partie supérieure du cadre (91) des lames (81) permet de l'étaler sur chaque sandwich après écartement par une translation du plateau inférieur. Cette partie est bloquée sur le tybe (15) à hauteur désirée par la bis de serrage (16) du coulisseau (9). Une partie inférieure avec l'ensemble couliseau (9) et un cadre (91) dans le sens de la longueur plusieurs séries de deux tiges rondes (82) surmontées d'aiguilles (83) sur toute la longueur avec pour chacune et d'un bout un épaulement carré et un pignon (85), la tige (82) pivote légèrement dans un perçage puis dans une mortaise carrée. A l'autre bout un perçage maintient chaque tige (82) et emprisonne un ressort spiral (88) de rappel et maintient un ressort (89) de compression permettant un déplacement latéral des tiges (82) pour obliger ' l'épaulement carré à s'engager dans la mortaise, ce qui permet le blocage après pivotement. En fonctionnement, il faut piquer les pains sur les aiguilles (83) ensuite monter la partie inférieure garnie de pain à couper vers la partie supérieure fixe de lames (81) qui vont couper complètement le pain dans le travers et partiellement dans le sens de la longueur. Une crémaillère (90) vient simultanément s'engrener avec des pignons (85) qui provoque l'acartement des aiguilles (83).    Le    maintien    des    aiguilles    dans    cette position est assuré par l'épaulement carré s'entageant dans la mortaise par l'intermédiaire des ressorts de compression §89) et spirale (88). Les pains sont alors coupés et écartés, accessibles pour les garnir successivement. Il suffit ensuite de repousser les tiges (82) en comprimant les ressorts (89) ce

0165891

qui libère les épaulements carrés de leurs mortaises, les ressorts spirales (88) ramènent l'ensemble en position initiale. Les sandwiches sont ainsi tous refermés et prêts.

Les accessoires de moulage (92) de la Figure 11 et en variante d'évidage, de calibrage, de coupe en quartiers se composent de 2 parties avec pour la partie inférieure un coulisseau (9) sur lequel est accrochée une plaque (93) à matrices creuses moulées ; l'ensemble est mobile sur la colonne (4) . La partie supérieure montée sur un coulisseau (9) bloqué par la vis (16) sur le tube (15) comprend une plaque (94) à matrices en reliefs moulées à replis coupants. En fonctionnement, il suffit de dérouler la pâte à tarte, etc ... sur la surface de la plaque (93) à matrice creuse, de déplacer verticalement la partie inférieure qui vient en contact avec la plaque (94) à matrice en reliefs     les replis, coupent au préalable la pâte qui est ensuite emboutie dans chaque cavité, donnant des tartelettes individuelles coupées, moulées, prêtes à cuires. Pour éviter à la pâte de gonfler et d'onduler en cuisson, au lieu d'y adjoindre des ingrédients à cette fin, les deux parties restent superposées et l'ensemble est enfourné. Sur le même principe d'emboutissage, divers autres petits accessoires peuvent être utilisés pour assurer les préparations d'une quantité importante d'aliments à la fois, soit d'évider des légumes ou fruits, de calibrer des pommes de terre  pour certaines utilisations, de couper en quartiers des tomates, citrons, etc..., ce qui, avec un peu de matériel, offre un gain de temps appréciable.

L'accessoire flexible de transmission pour outillage (97) divers de la Figure 12 est composé d'un cable (98) qui s'emboîte dans la partie supérieure de la vis sans fin (6) maintenu par une gaine de protection (99) qui s'emboîte et se fixe par un système de douille (100) à l'intérieur de la colonne (4) .A l'autre extrémité une manchon à douille (101) permet extérieurement sa tenue à deux mains et intérieurement la fixation à douille d'un fouet (102),d'un mélangeur (103), d'un goupillon (104) (ceux-ci peuvent être éventuellement positionnés sur un manche   ). Un mixer (106), un panier d'écalage et d'essorage (107) avec une paroie ondulée (108), d'un axe (109) autour duquel sont fixés plusieurs niveaux de disques ondulés (110) solidaires de l'axe, ceci pour éviter, du fait de la force centrifuge, le plaquage des aliments contre le fond et les paroies. Une rampe de projections d'eau (111) accrochée à la paroie extérieure du panier (107) et reliée à une prise d'eau rapide, elle permet, avec la pression, de favoriser le résultat pour l'utilisation en écalage d'oeufs durs. En fonctionnement, le-dit panier (107) pour essorer se dépose dans un bac traditionnel de lavage de légumes. Les oeufs eux, peuvent être déposés directement dans le panier (107) et mis en cuisson dans une marmite, il suffit ensuite de brancher la rampe d'eau (111) et le flexible de transmission (97) sur le support (1) et sur l'axe (109) du panier (107), les coques d'oeufs se récupèrent dans le fond du-dit panier. L'écrou (84) situé sur la vis sans fin (6) est débrayable il permet pour ces utilisations de la transformer en arbre de transmission prolongé ensuite par le flexible (97).

**0165891**

I Dispositif support mobile avec combinés (I) (20) (24) (30) (40) (50) (56) (61) (67) (80) (92) (97) destinés à la préparation ou à la distribution d'aliments assurant un fonctionnement par déplacement vertical ou horizontal ou éventuellement de rotation, caractérisé en ce qu'il comprend :

   - un socle (2) supportant au moins une colonne verticale (4) présentant une fente verticale;

   - une vis sans fin (6) logée à l'intérieur de la dite colonne verticale, disposée verticalement ;

   - des moyens de commandes (7)aptes à entrainer en rotation la dite vis sans fin ;

   - un écrou (8) en prise avec la vis sans fin (6) et immobilisé en rotation par un ergot (10) éventuellement escamotable et qui traverse la fente, cet ergot pouvant assurer le déplacement des accessoires combinés;

   - des leviers excentriques (18) éventuellement pour soulever et transporter les meubles (24) .

2 Dispositif selon la revendication I caractérisé en ce que les moyens de support de présentation et de mobilité verticale des plateaux (20) et de plateau à roulement (30) sont les éléments du support mobile(1) ;
Les plateaux (20) composés d'un cadre (21) avec un recouvrement plein ou d'une grille sont supportés par les coulisseaux (9) qui se déplacent verticalement sur la colonne (4) et le tube (15) superposable; ils se dégagent automatiquement en se relevant,ou en se glissant horizontalement par les actions conjuguées du contact (17) libéré determinant ainsi le démarrage du moteur ( 7). Le plateau ou la grille de chargement(30) avec ou sans  . : roulements    possède des tiges longitudinales (32) et des roulements (33), des tiges transversales (34) et des roulements (35) sur un même plan, des excentriques à leviers permettent un réglage vertical indépendant des roulements (33) ou (35) ;chargement de plusieurs niveaux simultanément.

3. Dispositif selon la revendication I et 2 caractérisé en ce que les moyens de stockage , de conditionnement et de distribution du contenu des plateaux (20) sont les meubles froids, chauds ou neutres (24) ; Ils reçoivent à l'intérieur le colonne (4) et les plateaux (20) et à l'extérieur le socle (2) munis de leviers excentriques (I8) passe sous leurs fonds et entre leurs pieds permettant le transport des dits meubles; Des guides (28) assurent le centrage de l'ensemble colonne et socle ainsi que les connexions directes électriques (I3) (des joints (25)) uneporte (29), un couvercle (26) pour le maintient calorifique fournit par les éléments (27); Intérieurement les plateaux (20) en montant distribuent automatiquement et se dégagent sur le tube (I5) superposé sur la colonne (4) ceci grâce ay contact (17) et éventuellement au ressort (12)

4. Dispositif selon la revendication I, caractérisé en ce que les moyens de supports de fixation et de mobilité verticale des accessoires (40)(50)(56)(6I) (67)(80)(92) sont les éléments du support mobile (I).
Ils sont composés de deux parties, une partie est montée sur au moins un coulisseau réglable (9  et bloqué par la vis (I6) sur le tube (15) avec un cadre (2I) ou (9I) dans ou sous lequel est fixée la partie supérieure de chacun de ces dits accessoires; L'autre partie est montée sur un coulisseau réglable (9)  avec un cadre (2I) ou (9I) dans lequel est fixée la partie inférieure de chacun de ces dits accessoires et est mobile sur la colonne (4).

5. Dispositif selon les revendications I et 4, caractérisé en ce que le support de mise en cuisson(40) comprend le cadre (2I) sous lequel est accroché des supports (42) permettant de faire pivoter les axes (44) solidaires d'un panier  ou des grilles superposables (45) (46) avec charnières extensibles (47) et des fermoirs rapides et réglables (48); Le socle (2) passant sous les appareils de cuisson entre des guides assure le centrage et la connexion électrique (I3).

6. Dispositifs selon les revendications I et 4 caractérisés en ce que les appareils portionneurs ronds (50) et rectangulaires (56) comprennent chacun le cadre (2I) dans lequel est fixé un support (5I) ou (57) de lames (52) ou (58) pour la partie supérieure; Pour la partie inférieure chaque cadre (2I) dans lequel est fixée une matrice (53) ou (59) et des guides (54) ou (60) favorisent l'engagement et l'escamotage des lames (52) ou (58); Des butées (55) permettent un travail de série.

7. Dispositifs selon les revendication I et 4 caractérisés en ce que l'appareil ouvre-boites (6I) comprend pour la partie supérieure un cadre (2I) dans laquelle est fixée une au moins cloche dentelée (62) avec des clips (65), des guides (64); La partie inférieure comprend un plateau (20) avec guides de centrage des boites (63); L'appareil de moulage, d'évidage et de coupe en quartiers etc (92) comprend pour la partie supérieure un cadre (2I) dans lequel est fixée une matrice en relief (94) avec des replis coupants; La partie inférieure comprend un cadre (2I) dans lequel est fixée une matrice creuse (93).

8. Dispositifs selon les revendication I et 4 caractérisés en ce que l'appareil doseur (67) comprend le cadre (2I) sous lequel est accrochée, par des bras (68) une cuve (69) avec dans le fond épais (70) interchangeable des fraisures qui reçoivent les embouts coniques (73) fixés solidairement par des crochets tendeurs (74) avec à l'intérieur de chacun de ces embouts une soupape conique (75); pour certaines utilisations, un couvercle lourd avec joints racleurs sont placés dans la cuve; La partie inférieure est composée d'une série de plateaux (20).

9. Dispositifs selon la revendication I et 4 caractérisés en ce que l'appareil à sandwiches (80) comprend pour la partie supérieure un cadre (9I) dans lequel sont fixées et tendues sur deux niveaux des lames dentelées (8I) avec une translation limitée des lames longitudinales; La partie inférieure comprend un cadre (9I) dans lequel snt fixées des séries de deux tiges (82) surmontées d'aiguilles (83), des parties rondes puis un épaulement carré assurent d'abord le pivotement et ensuite le blocage des tiges (82) dans des mortaises avec un système de ressorts (88) et (89) des pignons (85) et des crémaillères (90).

I0. Dispositif selon la revendication I caractérisé en ce que les moyens de transmission du flexible pour outillages (97) sont les éléments du support (1 ) Elle est composée d'un cable (98) qui s'emboite dans la partie supérieure de la vis sans fin (5) ou directement sur l'arbre du moteur (7), une gaine de protection (99) s'emboite d'une extrémité par une douille de fixation (100) à l'autre extrémité, un manchon à douille (I0I) de fixations d'appareils, un fouet (I02), un mélangeur (I03), un goupillon (I04), un mixer (I06), un panier d'essorage et d'écalage (I07) avec paroi ondulée (108) un axe (I09), des disques ondulés (II0) et une rampe de projection d'eau (III).

**0165891**

## FIG 1

## FIG 2

# FIG 3

20

17

20

24

13

COUPE A

PLANCHE 3/VI FIG 3

COUPE B

COUPE C

26

25

24

27

28

29

0165891

0165891

FIG 4

FIG 5

FIG 6

FIG 7

PLANCHE 5/VI

0165891

FIG 8

FIG 9

FIG 10

0165891

80

90
91
85
82
83
88
89
81

FIG 11

94
92
93

FIG 12

98
97
99
100
101
102
103
104
106
107
108
109
110
111

Office européen
des brevets

**RAPPORT DE RECHERCHE EUROPEENNE**

EP 85 46 0008

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-3 752 549 (BINKS et al.) <br> * En entier * | 1 | A 47 J 39/02 <br> A 47 B 31/02 <br> B 65 G 1/07 |
| A | GB-A- 725 567 (AMERICAN MACHINE & FOUNDRY CO.) <br> * En entier * | 1,2 | |
| A | FR-A-1 269 290 (ROULINA) <br> * En entier * | 1 | |
| A | CH-A- 473 572 (VEB STOLPEN) <br> * En entier * | 1 | |
| A | FR-A-2 156 426 (LAURENT) <br> * En entier * | 1 | DOMAINES TECHNIQUES RECHERCHES (Int. Cl.4) |
| A | EP-A-0 099 996 (LUEKON) <br> * En entier * | 1 | A 47 J <br> A 47 B <br> B 65 G |

Le présent rapport de recherche a été établi pour toutes les revendications

| Lieu de la recherche | Date d'achèvement de la recherche | Examinateur |
|---|---|---|
| LA HAYE | 23-07-1985 | SCHARTZ J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82